# EUROPEAN PATENT APPLICATION

(11) **EP 4 780 029 A1**
(43) Date of publication of application: **22.07.2026**
(21) Application number: 24879705.2
(22) Date of filing: 15.10.2024
(51) Int. Cl.: H04W 4/80, H04B 1/59, H04B 5/48, H04W 72/04, H04W 88/04

(54) **COMMUNICATION CONTROL METHOD AND COMMUNICATION NODE**

(30) Priority: 18.10.2023 JP 2023179853
(71) Applicant: Kyocera Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2024/036709
(87) International publication number: WO 2025/084282

(57) **Abstract**

In an aspect, a communication control method is a communication control method in a wireless communication system. The communication control method includes transmitting, at a communication node, to a base station a transmission request message for requesting transmission of an unmodulated carrier wave. The communication control method includes transmitting, at the base station, the unmodulated carrier wave in response to reception of the transmission request message. The communication control method includes receiving, at the communication node, a reflected wave of the unmodulated carrier wave from an IoT device.

## Description

### TECHNICAL FIELD

The present disclosure relates to a communication control method and a communication node.

### BACKGROUND OF INVENTION

In recent years, the Internet of Things (IoT) has gained attention in the wireless communication technology. It is expected that more "things" are connected with each other to improve production efficiency and enhance comfort of life compared to the conventional art.

Examples of a technology used for the IoT include barcodes and Radio Frequency IDentifiers (RFIDs). However, there is no interference management scheme for barcodes and RFIDs. Hence, it may be difficult to support large-scale networks with barcodes and RFIDs.

In recent years, in the Third Generation Partnership Project (3GPP) (registered trade mark. The same applies hereinafter) that is a standardization project for mobile communication systems, the feasibility of a new IoT technology is being studied. The IoT technology is assumed as a technology with a larger number of connections and a higher device density than those of the existing IoT technologies in 3GPP. The IoT technology is assumed as a technology with less complexity and power consumption than those of the existing 3GPP Low Power Wide Area (LPWA) technologies such as Narrow Band-IoT (NB-IoT) or Long Term Evolution-Machine Type Communication (LTE-MTC). An IoT device used by the IoT technology is called an ambient IoT device.

### CITATION LIST

### NON-PATENT LITERATURE

Non-Patent Document 1: 3GPP TR 38.848 V18.0.0 (2023-09)

### SUMMARY

In a first aspect, a communication control method is a communication control method in a wireless communication system. The communication control method includes transmitting, at a communication node, to a base station, a transmission request message for requesting transmission of an unmodulated carrier wave. The communication control method includes transmitting, at the base station, the unmodulated carrier wave in response to reception of the transmission request message. The communication control method includes receiving, at the communication node, a reflected wave of the unmodulated carrier wave from an IoT device.

In a second aspect, a communication node is a communication node in a wireless communication system. The communication node includes a controller configured to: transmit to a base station a transmission request message for requesting transmission of an unmodulated carrier wave; and receive, from an IoT device, a reflected wave of the unmodulated carrier wave transmitted from the base station in response to reception of the transmission request message.

### BRIEF DESCRIPTION OF THE DRAWINGS

FIG. 1 is a diagram illustrating a configuration example of a wireless communication system according to a first embodiment.
FIG. 2 is a diagram illustrating a configuration example of a User Equipment (UE) according to the first embodiment.
FIG. 3 is a diagram illustrating a configuration example of an ambient IoT device according to the first embodiment.
FIG. 4 is a diagram illustrating a configuration example of a wireless tag according to the first embodiment.
FIG. 5 is a diagram illustrating a configuration example of a protocol stack relating to a user plane according to the first embodiment.
FIG. 6 is a diagram illustrating a configuration example of a protocol stack relating to a control plane according to the first embodiment.
FIG. 7 is a diagram illustrating a communication example according to the first embodiment.
FIGs. 8(A) and 8(B) are diagrams illustrating an example of a topology according to the first embodiment.
FIGs. 9(A) and 9(B) are diagrams illustrating an example of the topology according to the first embodiment.
FIG. 10 is a diagram illustrating an example of the topology according to the first embodiment.
FIGs. 11(A) and 11B are diagrams illustrating a use example of a frequency according to the first embodiment.
FIG. 12 is a diagram illustrating a use example of the frequency according to the first embodiment.
FIG. 13 is a diagram illustrating a configuration example of a protocol stack relating to ambient IoT according to the first embodiment.
FIG. 14 is a diagram illustrating an operation example according to the first embodiment.
FIG. 15 is a diagram illustrating a configuration example of a protocol stack relating to the ambient IoT according to the second embodiment.
FIG. 16 is a diagram illustrating a configuration example of a protocol stack relating to the ambient IoT according to the second embodiment.
FIG. 17 is a diagram illustrating the configuration example of the protocol stack relating to the ambient IoT according to the second embodiment.
FIG. 18 is a diagram illustrating a configuration example of a protocol stack relating to the ambient IoT according to the second embodiment.
FIG. 19 is a diagram illustrating the configuration example of the protocol stack relating to the ambient IoT according to the second embodiment.
FIG. 20 is a diagram illustrating the configuration example of the protocol stack relating to the ambient IoT according to the second embodiment.
FIG. 21 is a diagram illustrating the configuration example of the protocol stack relating to the ambient IoT according to the second embodiment.
FIG. 22 is a diagram illustrating the configuration example of the protocol stack relating to the ambient IoT according to the second embodiment.
FIGs. 23(A) and 23(B) are diagrams illustrating the configuration examples of the protocol stack relating to the ambient IoT according to the second embodiment.
FIG. 24 is a diagram illustrating the configuration example of the protocol stack relating to the ambient IoT according to the second embodiment.

### DESCRIPTION OF EMBODIMENTS

One aspect provides a communication node that appropriately communicates with an IoT device.

Most of existing wireless communication devices use batteries that need to be manually exchanged and need to be manually charged. On the other hand, driving all IoT devices with the batteries requires not only the cost of the IoT devices but also maintenance cost of the IoT devices, and therefore is difficult to implement.

Firstly, the ambient IoT device described above is assumed to function as a batteryless device that does not have an energy storage function. In this case, the ambient IoT device functions as a pure batteryless device that does not have a power storage function at all and depends completely on availability of an external energy source.

Secondly, the ambient IoT device is assumed to function as a battery device having a limited energy storage function. The limited energy storage function is, for example, an energy storage function that does not need to be manually exchanged and does not need to be manually charged.

A specific example of the ambient IoT device will be described later. As described above, the technology that uses the ambient IoT devices is assumed to be a technology with a large number of connections and less complexity and power consumption compared to the existing 3GPP technology. It is expected that use of such an ambient IoT device will open up a new market as automation and digitalization advance in various industries.

Hereinafter, a wireless communication system according to an embodiment will be described with reference to the drawings. In the description of the drawings, the same or similar parts are denoted by the same or similar reference signs. The ambient IoT device is used in the wireless communication system according to the embodiment.

### First Embodiment

### Configuration Example of Wireless Communication System

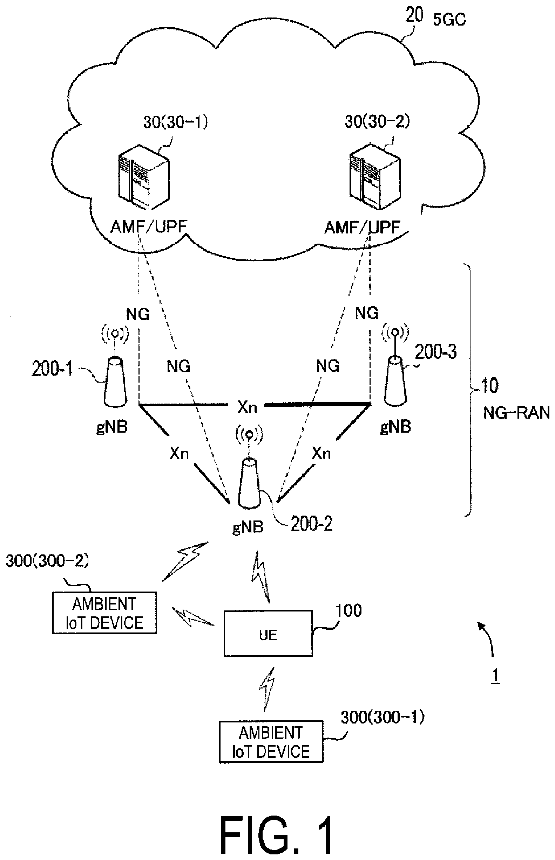

FIG. 1 is a diagram illustrating a configuration example of the wireless communication system according to a first embodiment. A wireless communication system 1 includes a mobile communication system that is the 5th Generation System (5GS) of the 3GPP standard. The description below takes the 5GS as an example of the mobile communication system, but a Long Term Evolution (LTE) system may at least partially be applied. As the mobile communication system, a sixth generation (6G) system or a subsequent system may at least partially be applied. Note that the wireless communication system 1 may be the mobile communication system.

The wireless communication system 1 includes a User Equipment (UE) 100, a 5G radio access network (NG-RAN: Next Generation Radio Access Network) 10, a 5G Core Network (5GC) 20, and ambient IoT devices 300. Note that a node other than the UE 100 may be present between the gNBs 200 and the ambient IoT devices 300. Such a node may be referred to as an assisting node or an intermediate IAB node. The assisting node and the intermediate node will be described in detail later. The 5GC 20 may be hereinafter simply referred to as the core network (CN) 20.

The UE 100 is a mobile wireless communication apparatus. The UE 100 may be any apparatus as long as it is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes the base stations (referred to as "gNBs" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a Radio Resource Management (RRM) function, a function of routing user data (hereinafter simply referred to as "data"), a measurement control function for mobility control and scheduling, and the like. Note that a "cell" is used as a term indicating a minimum unit of a wireless communication area. The "cell" is also used as a term representing a function or a resource for performing wireless communication with the UE 100. One cell belongs to one carrier frequency (hereinafter simply referred to as a "frequency").

Note that the gNB can be also connected to an Evolved Packet Core (EPC) that is a core network of LTE. An LTE base station can also be connected to the 5GC. The LTE base station and the gNB can be connected via an inter-base station interface.

The 5GC 20 includes an Access and Mobility Management Function (AMF) 30 and a User Plane Function (UPF). The AMF 30 performs various types of mobility control and the like for the UE 100. The AMF 30 manages mobility of the UE 100 by communicating with the UE 100 by using Non-Access Stratum (NAS) signaling. The UPF controls data transfer. The AMF 30 and the UPF are connected to the gNB 200 via an NG interface, which is an interface between the base station and the core network.

The ambient IoT device 300 is a wireless communication apparatus capable of wireless communication with the UE 100 and/or the gNB 200. The ambient IoT device 300 may wirelessly communicate with an assisting node or an intermediate node as described below.

Firstly, by reflecting a radio wave transmitted from the UE 100 or the gNB 200 and modulating the reflected wave, the ambient IoT device 300 can transmit information on the inside the ambient IoT device 300. In general, a technology of reflecting an unmodulated radio wave, modulating the reflected wave, and transmitting information will be referred to as backscattering communication. The ambient IoT device 300 has a backscattering communication function. The ambient IoT device 300 may be an information medium capable of reading information from an internal memory by using the backscattering communication function. The ambient IoT device 300 may be an information medium capable of writing information in the internal memory. In this case, by receiving a transmitted radio wave in which information has been modulated, and demodulating the received radio wave, the ambient IoT device 300 can extract the information.

Secondly, the ambient IoT device 300 may be a batteryless IoT device. In this case, the ambient IoT device 300 converts a received radio wave into energy (specifically, electric power) and operates using the energy. The ambient IoT device 300 may use other than radio waves as an energy source, and may convert other than radio waves into energy using, for example, light, heat, magnetism, vibration, or sound. Such energy conversion is generally referred to as energy harvesting. Known methods may be used for the energy harvesting. As described above, the ambient IoT device may have an energy harvesting function. The ambient IoT device 300 may have a limited battery function. As described above, the "limited battery" is a battery that does not need to be manually exchanged and does not need to be manually charged. The ambient IoT device 300 may have a battery function of charging with electric power acquired by the energy harvesting function. The ambient IoT device 300 may be a wireless tag.

### Configuration Example of UE

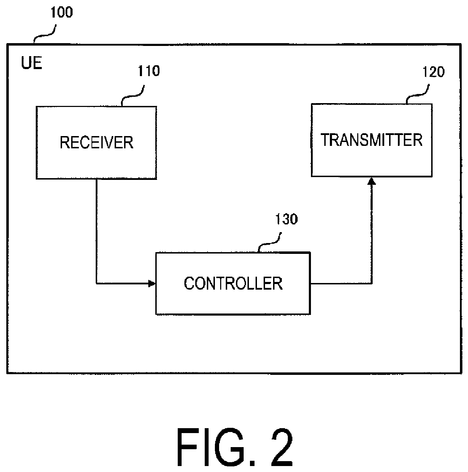

FIG. 2 is a diagram illustrating a configuration example of the user equipment 100 (UE) according to the first embodiment. The UE 100 includes a receiver 110, a transmitter 120, and a controller 130. The receiver 110 and the transmitter 120 constitute a wireless communicator that performs wireless communication with the gNB 200. The receiver 110 and the transmitter 120 can wirelessly communicate with the ambient IoT device 300.

The receiver 110 performs various receptions under the control of the controller 130. The receiver 110 includes an antenna and a reception device. The reception device converts a radio signal received through the antenna into a baseband signal (a reception signal) and outputs the resulting signal to the controller 130. The receiver 110 may receive a reflected wave reflected by the ambient IoT device 300 under the control of the controller 130. The receiver 110 receives the received reflected wave as a radio signal, converts the radio signal into a baseband signal, and outputs the baseband signal to the controller 130.

The transmitter 120 performs various transmissions under the control of the controller 130. The transmitter 120 includes an antenna and a transmission device. The transmission device converts a baseband signal (a transmission signal) output by the controller 130 into a radio signal, and transmits the resulting signal through the antenna. The transmitter 120 (or the transmission device) may transmit an unmodulated carrier wave under the control of the controller 130. The carrier wave is reflected by the ambient IoT device 300.

The controller 130 performs various controls and processes in the UE 100. Such processing includes processing of respective layers to be described later. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing. In the example described below, operations or processing in the UE 100 may be performed by the controller 130.

### Configuration Example of gNB

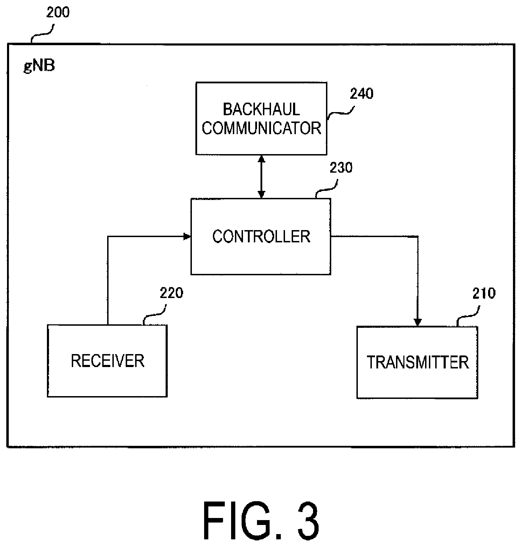

FIG. 3 is a diagram illustrating a configuration example of the gNB 200 (base station) according to the first embodiment. The gNB 200 includes a transmitter 210, a receiver 220, a controller 230, and a backhaul communicator 240. The transmitter 210 and the receiver 220 constitute a wireless communicator that performs wireless communication with the UE 100. The transmitter 210 and the receiver 220 can wirelessly communicate with the ambient IoT device 300. The backhaul communicator 240 constitutes a network communicator that performs communication with the CN 20.

The transmitter 210 performs various transmissions under the control of the controller 230. The transmitter 210 includes an antenna and a transmission device. The transmission device converts a baseband signal (a transmission signal) output by the controller 230 into a radio signal, and transmits the resulting signal through the antenna. The transmitter 210 (or the transmission device) may transmit an unmodulated carrier wave under the control of the controller 230. The carrier wave is reflected by the ambient IoT device 300.

The receiver 220 performs various types of reception under control of the controller 230. The receiver 220 includes an antenna and a reception device. The reception device converts a radio signal received through the antenna into a baseband signal (a reception signal), and outputs the resulting signal to the controller 230. The receiver 220 may receive a reflected wave reflected by the ambient IoT device 300 under the control of the controller 230. The receiver 220 receives the received reflected wave as a radio signal, converts the radio signal into a baseband signal, and outputs the baseband signal to the controller 230.

The controller 230 performs various types of control and processing in the gNB 200. Such processing includes processing of respective layers to be described later. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing. In an example described below, operations or processing in the gNB 200 may be performed by the controller 230.

The backhaul communicator 240 is connected to a neighboring base station via an Xn interface which is an inter-base station interface. The backhaul communicator 240 is connected to the AMF 30/UPF via the NG interface between the base station and the core network. Note that the gNB 200 may include a Central Unit (CU) and a Distributed Unit (DU) (i.e., functions are divided), and both units may be connected via an F1 interface that is a fronthaul interface.

### Configuration Example of Ambient IoT Device

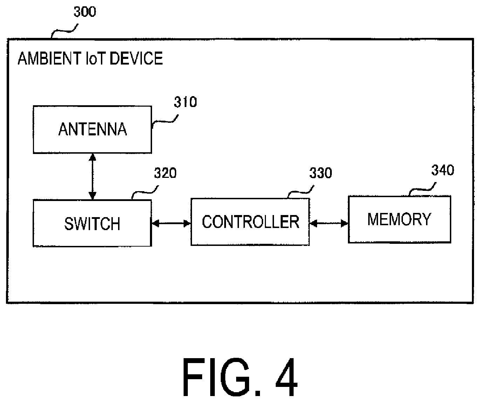

FIG. 4 is a diagram illustrating a configuration example of the ambient IoT device 300 according to the first embodiment. The ambient IoT device 300 according to the first embodiment includes an antenna 310, a switch 320, a controller 330, and a memory 340.

The antenna 310 receives an unmodulated carrier wave. The unmodulated carrier wave will be referred to as a Continuous Wave (CW) below. The antenna 310 converts the received CW into a reception signal and outputs the reception signal to the switch 320. The antenna 310 reflects the CW and transmits the reflected wave according to the transmission signal output from the switch 320. The reflected wave is hereinafter referred to as Back Scattering (BS). The antenna 310 performs BS transmission.

When the switch 320 receives the reception signal from the antenna 310, the switch 320 is turned on and outputs the reception signal to the controller 330. The switch 320 is controlled to be turned on or off under the control of the controller 330, and outputs a transmission signal corresponding to on or off to the antenna 310. The switch 320 may be a Radio Frequency (RF) switch. The switch 320 may be configured by a transistor. The switch 320 may be a mechanical switch capable of being physically turned on or off.

The controller 330 has the energy harvesting function of converting the reception signal received from the switch 320 into electric power. The controller 330 controls the switch 320 and the memory 340 using the electric power as driving electric power of the ambient IoT device 300. The controller 330 reads information stored in the memory 340, and controls the switch 320 to cause the switch 320 to transmit the transmission signal corresponding to the information. For example, the controller 330 can control the reflectance of the reflected wave (BS) (e.g., whether the reflectance is set to 100% or 0%) by controlling on or off of the switch 320, and output a transmission signal corresponding to information (e.g., one bit) stored in the memory 340 from the switch 320 to the antenna 310. By, for example, controlling a timing to turn on or off the switch 320, the controller 330 can output a transmission signal corresponding to a plurality of bits from the switch 320 to the antenna 310. As described above, by controlling on or off of the switch 320, the controller 330 can control the reflectance of the reflected wave (BS), and transmit from the antenna 310 the modulated reflected wave corresponding to the information stored in the memory 340.

The memory 340 holds various types of pieces of information. The information held in the memory 340 may be information acquired when the ambient IoT device 300 functions as a sensor. The information held in the memory 340 may be information that is held in the memory 340 in advance and unique to the ambient IoT device 300. Examples of the unique information include identification information of the ambient IoT device 300 (a group to which the ambient IoT device 300 belongs). The memory 340 can read the held information under the control of the controller 330. Information may be written in the memory 340 under the control of the controller 330. In this case, the controller 330 converts the reception signal received from the antenna 310 into a baseband signal of a baseband, reads information from the baseband signal, and writes the read information in the memory 340.

Note that the switch 320 is an example, and a modulator may be used instead of (or by generalizing) the switch 320. Under the control of the controller 330, the modulator may modulate the data read from the memory 340 to generate a transmission signal. Under the control of the controller 330, the modulator may demodulate the reception signal from the antenna 310 to acquire data.

The ambient IoT device 300 may also have the limited battery. As described above, the word "limited" is a battery that does not need to be manually exchanged and does not need to be manually charged. The ambient IoT device 300 may have the above-described energy harvesting function.

### Protocol Stack

A configuration example of the protocol stack will be described. Here, a configuration example of the protocol stack in the UE 100, the gNB 200, and the AMF 30 will be described.

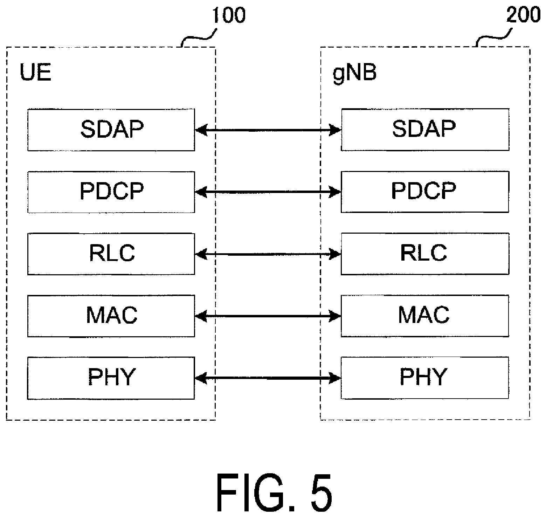

FIG. 5 is a diagram illustrating a configuration example of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. Note that the PHY layer of the UE 100 receives Downlink Control Information (DCI) transmitted from the gNB 200 over a Physical Downlink Control CHannel (PDCCH). Specifically, the UE 100 performs blind decoding of the PDCCH by using a Radio Network Temporary Identifier (RNTI) and acquires a successfully decoded DCI as a DCI addressed to the UE 100. The DCI transmitted from the gNB 200 is appended with Cyclic Redundancy Code (CRC) parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

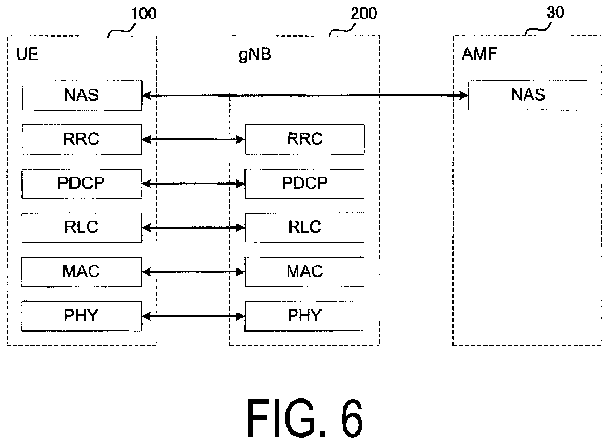

FIG. 6 is a diagram illustrating a configuration example of a protocol stack of a radio interface of a control plane handling signaling (a control signal).

The protocol stack of the radio interface of the control plane includes a Radio Resource Control (RRC) layer and a Non-Access Stratum (NAS) instead of the SDAP layer illustrated in FIG. 6.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS, which is located above the RRC layer, performs session management, mobility management, and the like. NAS signaling is transmitted between the NAS of the UE 100 and the NAS of the AMF 30. The UE 100 includes an application layer other than the protocol of the radio interface. A layer lower than the NAS will be referred to as an Access Stratum (AS).

### Communication Example of Ambient IoT Device

A communication example of the ambient IoT device 300 according to the first embodiment will be described.

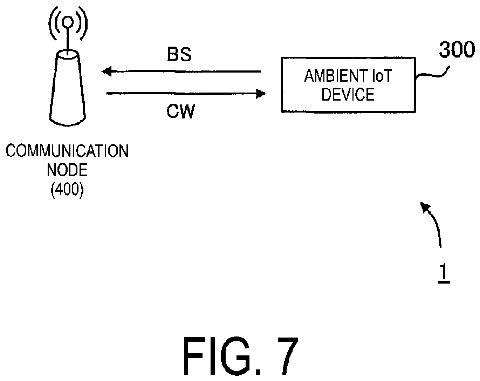

FIG. 7 is a diagram illustrating a communication example of the ambient IoT device 300 according to the first embodiment.

As illustrated in FIG. 7, a node (or a device) capable of directly communicating with the ambient IoT device 300 will be referred to as a communication node 400. The communication node 400 may be the UE 100 or the gNB 200. The communication node 400 may be a relay device. The communication node 400 may be referred to as an assisting node. The communication node 400 may be referred to as an intermediate node. The assisting node and the intermediate node will be described later. The communication node 400 may be an Integrated Access and Backhaul (IAB) node. The IAB node is, for example, a relay node that is interposed between the UE 100 and the gNB 200, and is a node to which a backhaul link (a communication link between the IAB node and the gNB 200) is connected mainly by wire. The communication node 400 may be a Network-Controlled Repeater (NCR). The NCR is, for example, a relay node that is interposed between the UE 100 and the gNB 200, and is a node with the gNB 200 and the NCR connected mainly by a wireless connection. The communication node 400 may be an eNB that is an LTE base station. The communication node 400 may be a network node that functions as a base station of 6G or subsequent generations.

The communication node 400 transmits an unmodulated Carrier Wave (CW). That is, the communication node 400 performs CW transmission. The ambient IoT device 300 reflects the unmodulated carrier wave and transmits the reflected wave. The reflected wave is modulated according to data transmitted from the ambient IoT device 300. That is, the ambient IoT device 300 performs BS transmission. The communication node 400 performs BS reception.

Note that, as for the communication node 400, a communication node that performs CW transmission and a communication node that performs BS reception may be different.

As described above, various modes are assumed as connection modes between the ambient IoT device 300 and the communication node 400 according to the type of the communication node 400. Various modes are assumed as a connection mode of the ambient IoT device 300 in the wireless communication system 1. 3GPP discusses four topologies assuming these connection modes as topologies. Hereinafter, the four topologies (topology 1, topology 2, topology 3, and topology 4) will be described.

### (Topology of Ambient IoT Device 300)

### (A1) Topology 1

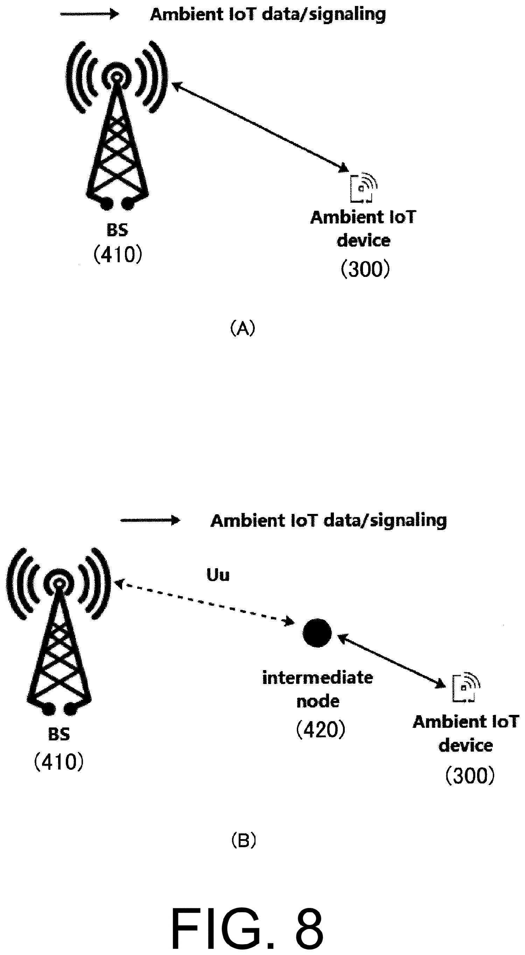

FIG. 8(A) is a diagram illustrating a configuration example of topology 1 according to the first embodiment.

As illustrated in FIG. 8(A), in a case of topology 1, the ambient IoT device 300 directly and bidirectionally communicates with a Base Station (BS) 410. Data relating to the ambient IoT device 300 and/or signaling relating to the ambient IoT device 300 are transferred between the ambient IoT device 300 and the base station 410. In the case of topology 1, the base station 410 that performs CW transmission to the ambient IoT device 300 and the base station 410 that performs BS reception from the ambient IoT device 300 may be different. As for topology 1, an example where the communication node 400 is the base station 410 is described.

### (A2) Topology 2

FIG. 8(A) is a diagram illustrating a configuration example of topology 2 according to the first embodiment.

As illustrated in FIG. 8(A), in a case of topology 2, an intermediate node 420 is present between the ambient IoT device 300 and the base station 410. That is, in the case of topology 2, the ambient IoT device 300 bidirectionally communicates with the intermediate node 420. The intermediate node 420 may be the communication node 400. That is, the intermediate node 420 may be any one of the gNB 200, the UE 100, a relay node, an IAB node, or an NCR. The intermediate node 420 transfers data relating to the ambient IoT device 300 and/or signaling relating to the ambient IoT device 300 between the base station 410 and the ambient IoT device 300. As for topology 2, an example where the communication node 400 is the intermediate node 420 is described.

### (A3) Topology 3

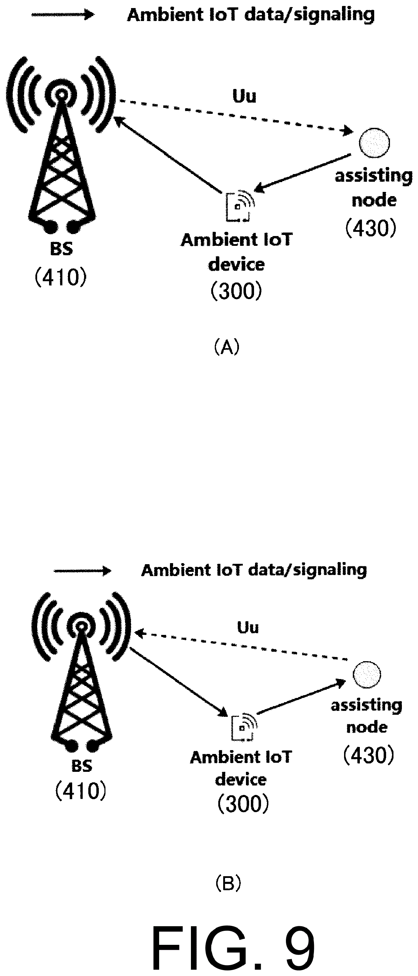

FIGs. 9A and 9B are diagrams illustrating a configuration example of topology 3 according to the first embodiment. In a case of topology 3, communication is performed via a node called an assisting node 430. That is, as illustrated in FIG. 9(A), the ambient IoT device 300 transmits data and/or signaling to the base station 410, and receives data and/or signaling from the assisting node 430. In FIG. 9(A), the assisting node 430 may perform CW transmission, and the base station 410 may perform BS reception. FIG. 9(A) illustrates communication in a downstream direction.

As illustrated in FIG. 9(B), the ambient IoT device 300 receives data and/or signaling from the base station 410, and transmits data and/or signaling to the assisting node 430. In FIG. 9(B), the base station 410 may perform CW transmission, and the assisting node 430 may perform BS reception. FIG. 9(B) illustrates communication in an upstream direction.

As described above, in the case of topology 3, the assisting node 430 may be a node that performs CW transmission but does not perform BS reception (FIG. 9(A)). The assisting node 430 may be a node that does not perform CW transmission but performs BS reception (FIG. 9(B)). That is, the assisting node 430 may be a node that performs any one of the CW transmission or the BS reception. As for topology 3, an example where the assisting node 430 is the communication node 400 is described. The assisting node 430 may be any one of the gNB 200, the UE 100, the relay node, the IAB node, or the NCR.

### (A4) Topology 4

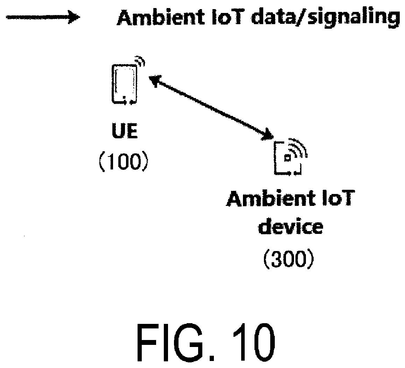

FIG. 10 is a diagram illustrating a configuration example of topology 4 according to the first embodiment. In a case of topology 4, the ambient IoT device 300 bidirectionally communicates with the UE 100. Data and/or signaling are transferred between the UE 100 and the ambient IoT device 300. As for topology 4, an example where the communication node 400 is the UE 100 is described.

### (Multiple Access Method for Ambient IoT Device)

The wireless communication system 1 including the ambient IoT devices 300 assumes that a very large number of the ambient IoT devices 300 are connected to the wireless communication system 1. In this case, when the ambient IoT devices 300 simultaneously perform BS transmission using frequencies that are entirely the same, interference occurs. Hence, the communication node 400 on the reception side may not be able to normally receive the reflected wave transmitted from the ambient IoT device 300.

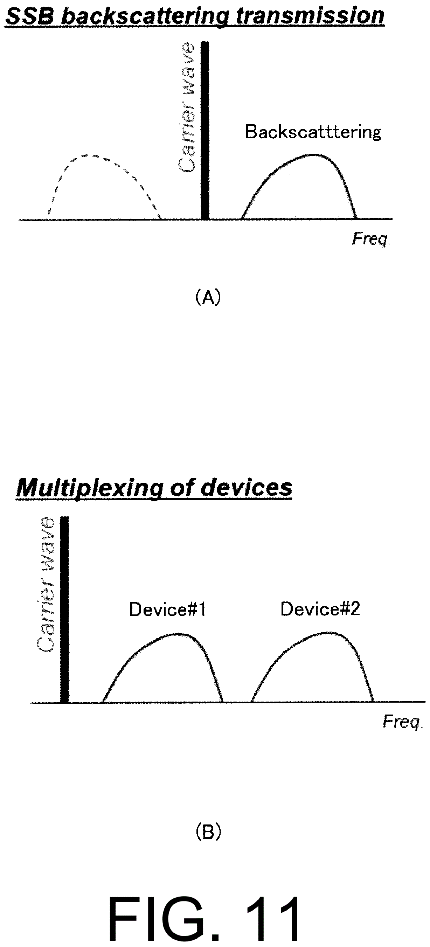

FIGs. 11A and 11B are diagrams illustrating an example of the multiple access method according to the first embodiment.

As illustrated in FIG. 11(A), for BS transmission, a transmission scheme using single sideband (SSB) transmission may be used. SSB is a scheme of removing a sideband of one side at a time of amplitude modulation and performing transmission using a sideband of a remaining other side. In the case of amplitude modulation, a frequency component includes two sidebands (a Low Side Band (LSB) and an Upper Side Band (USB)) that are symmetrical with respect to the carrier wave, but a sideband of one side (the low side band is removed and the upper side band is used in FIG. 11(A)) is used for SSB. Accordingly, SSB can reduce transmission power of the ambient IoT device 300 and can increase the frequency efficiency compared to the case of using dual sidebands. By estimating a missing sideband from a position of the carrier wave, the communication node 400 on the receiving side can process the missing side band similarly to the case of the dual sidebands. SSB may be executed by, for example, a known configuration. By, for example, inputting a carrier wave and a signal wave to a balanced modulator, performing balanced modulation on the carrier wave with the signal wave, and then removing an unnecessary sideband using a Band Pass Filter (BPF), transmission can be performed using SSB. Such a component may be provided in, for example, the controller 330. Note that a transmission scheme that uses dual sidebands will be referred to as dual sideband (DSB).

As illustrated in FIG. 11(B), when a plurality of the ambient IoT devices 300 simultaneously performs BS transmission using SSB, the BS transmission is performed using different frequencies. Thus, even when the plurality of ambient IoT devices 300 simultaneously performs the BS transmission using SSB, interference can be avoided and the communication node 400 can normally perform the BS reception.

Note that which frequency each ambient IoT device 300 uses to perform the BS transmission may be determined in advance for each ambient IoT device 300. The communication node 400 may indicate the frequency to the ambient IoT device 300. In the latter case, for example, the communication node 400 may indicate the frequency by transmitting a carrier wave modulated so as to include information of the frequency at a time of CW transmission.

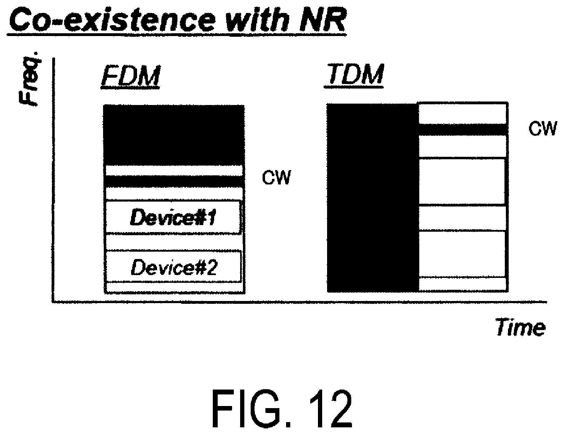

It may be requested that a radio resource used for communication with the ambient IoT device 300 coexists with a radio resource used for NR as illustrated in FIG. 12. That is, a frequency band different from that of the radio resource used for NR may be used for the radio resource used for communication with the ambient IoT device 300. The radio resource used for communication with the ambient IoT device 300 may be used at a different timing from that of the radio resource used for NR even when the same frequency band is used.

### Protocol Stack

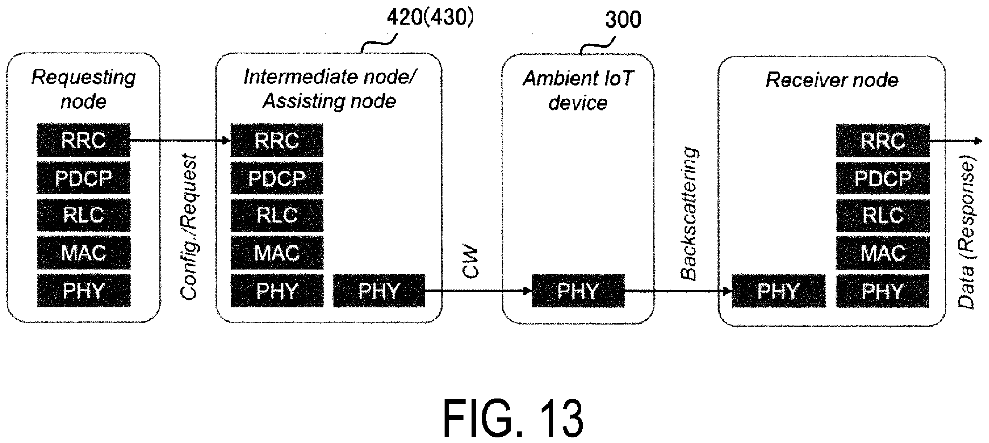

FIG. 13 is a diagram illustrating a configuration example of a protocol stack in the wireless communication system 1 including the ambient IoT devices.

The protocol stack will be described specifically in a second embodiment. FIG. 13 illustrates an example of the protocol stack. In the example illustrated in FIG. 13, the requesting node transmits a configuration and/or a request relating to communication with the ambient IoT device 300 to the intermediate node 420 (or the assisting node 430) using an RRC message. The physical layer (PHY) performs CW transmission and BS transmission, and a receiver node transmits data (or a response message) received through the BS transmission using the RRC message. FIG. 13 illustrates an example where the requesting node and the receiver node are the gNBs 200, and the intermediate node 420 (or the assisting node 430) is the UE 100.

### Communication Control Method According to First Embodiment

For example, the following case is assumed. That is, topology 3 illustrated in FIG. 9(B) is used. The UE 100 that is the assisting node 430 executes a specific application. The UE 100 receives a control message relating to the application from an Over The Top (OTT) server (via the base station 410). The control message includes an indication to read information stored in the ambient IoT device 300. In such a use case, the UE 100 needs to acquire, from the ambient IoT devices 300, information stored in the ambient IoT devices 300.

In the first embodiment, an example where the assisting node 430 requests the base station 410 to perform CW transmission will be described. Specifically, firstly, a communication node (e.g., assisting node 430) transmits a transmission request message for requesting transmission of an unmodulated carrier wave (e.g., CW) to a base station (e.g., base station 410). Secondly, the base station transmits the unmodulated carrier wave in response to reception of the transmission request message. Thirdly, the communication node receives a reflected wave of the unmodulated carrier wave from the IoT device (e.g., ambient IoT device 300).

As described above, when the assisting node 430 requests the base station 410 to perform CW transmission, the base station 410 performs CW transmission. The assisting node 430 can receive the reflected wave for the CW transmission from the ambient IoT device 300. Hence, the assisting node 430 can appropriately communicate with the ambient IoT device 300. In the above-described use case, the UE 100 that is the assisting node 430 can acquire data from the ambient IoT device 300 according to the indication from the OTT server, and transmit the acquired data to the OTT server.

### Operation Example According to First Embodiment

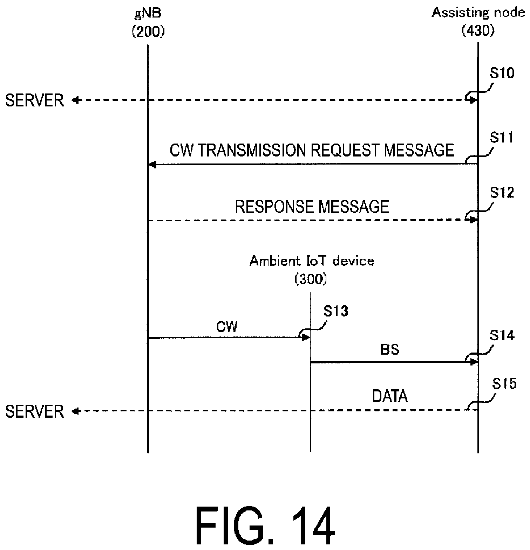

FIG. 14 is a diagram illustrating the operation example according to the first embodiment. FIG. 14 assumes topology 3 (FIG. 9(B)). As described above, the assisting node 430 illustrated in FIG. 14 is a node that can receive from the ambient IoT device 300 the reflected wave (BS) for the CW transmission without performing the CW transmission to the ambient IoT device 300. The gNB 200 illustrated in FIG. 14 is an example of the base station 410 in the case of topology 3.

In step S10, the assisting node 430 may be connected to the server in the upper layer.

Firstly, the server may be configured, for example, as follows. That is, the server may be the OTT server. In this case, the assisting node 430 and the OTT server may be connected to each other in an application layer. The server may be the AMF 30. In this case, the assisting node 430 and the AMF 30 may be connected to each other in a NAS layer.

Secondly, communication with the ambient IoT device 300 may be configured for the upper layer of the assisting node 430. The application layer of the assisting node 430 may receive a control message including communication configuration information from the OTT server. In this case, the application layer of the assisting node 430 may perform configuration for the ambient IoT device 300 according to the communication configuration information. The NAS layer of the assisting node 430 may receive a NAS message including the communication configuration information from the AMF 30. The NAS layer of the assisting node 430 may perform configuration for the ambient IoT device 300 according to the communication configuration information. The communication configuration information may include a communication type at a time when communication is performed with the ambient IoT device 300. Examples of the communication type include one-shot communication, periodic communication, and event-triggered communication of performing communication when a specific event occurs.

Thirdly, the upper layer of the assisting node 430 may output the configuration for the ambient IoT device 300 to the AS layer of the assisting node 430. The AS layer of the assisting node 430 may accept the configuration. The upper layer of the assisting node 430 may indicate communication with the ambient IoT device to the AS layer. The AS layer of the assisting node 430 may accept the indication.

In step S11, the assisting node 430 requests CW transmission to the gNB 200. For example, a transmitter of the assisting node 430 transmits a CW transmission request message for requesting CW transmission to the gNB 200. The CW transmission request message is an example of a transmission request message for requesting transmission of an unmodulated carrier wave.

Firstly, a predetermined message may be used as the CW transmission request message according to a type of the assisting node 430. That is, if the assisting node 430 is the UE 100, the CW transmission request message may be an RRC message (e.g., UEAssistanceInformation message) or a MAC CE. If a new layer (e.g., ambient IoT device layer) is defined for the ambient IoT device 300, the CW transmission request message may be a new message (e.g., ambient IoT configuration message) of the layer. If the assisting node 430 is a gNB (in this case, the gNB 200 that is the CW transmission source is a gNB #1, and the gNB 200 that is the assisting node 430 is a gNB #2), the CW transmission request message may be an Xn-AP message. If the gNB 200 of the CW transmission source is a CU of the gNB and the assisting node 430 is a DU of the gNB, the CW transmission request message may be an F1-AP message. Even if the assisting node 430 is an IAB node, the CW transmission request message may be the F1-AP message.

In the following description, messages that differ depending on the type of the assisting node 430 may be collectively referred to as "predetermined messages". The predetermined message may be any one of an RRC message, a MAC CE, a new message newly defined as a layer for the ambient IoT devices 300, the NG-AP message, the Xn-AP message, or the F1-AP message.

Secondly, the CW transmission request message may include at least any of the followings.

### (B1) Information of Ambient IoT Device 300

### (B2) Radio Resource Information

The information of the ambient IoT device 300 in (B1) may be, for example, identification information of the ambient IoT device 300 (a group to which the ambient IoT device 300 belongs). That is, the CW transmission request message may include the identification information of the ambient IoT device 300 and/or the identification information of the group to which the ambient IoT device 300 belongs. The identification information may be associated with information of a radio resource. Association between the identification information and the information of the radio resource may be configured in advance. If the association is configured in advance, for example, the gNB 200 may transmit a configuration message including information of radio resources associated with the identification information (in a list format) to the assisting node 430. The configuration message may be transmitted as a predetermined message. The gNB 200 may receive (the NG-AP message including) the information of the radio resource associated with the identification information from the AMF 30. When receiving the information from the AMF 30, the gNB 200 may transmit the configuration message including the information to the assisting node 430. The radio resource may be a radio resource used for CW transmission. The radio resource may be a radio resource used for BS reception. The radio resource may be a radio resource used for both of the CW transmission and the BS reception.

The radio resource information in (B2) may be transmitted when the identification information of the ambient IoT devices 300 is not associated with the radio resource information. The radio resource information may be radio resource information used for the CW transmission. The radio resource information may be radio resource information used for the BS reception. The radio resource information may be radio resource information used for both of the CW transmission and the BS reception. A frequency domain in the radio resource information may be represented by a band number and/or a center frequency. The center frequency may be indicated by an Absolute Radio-Frequency Channel Number (AFRCN). The center frequency may be represented by an offset from a lower limit (or an upper limit) of a system band. The radio resource information may include information indicating whether one-shot communication is performed or periodic communication is performed in a time domain. If periodic communication is performed, the radio resource information may include a reference timing and/or a cycle value.

The CW transmission request message may not include any one of (B1) and (B2). In this case, the CW transmission request message may be a message for simply requesting CW transmission.

In step S12, the gNB 200 may transmit to the assisting node 430 a response message to the CW transmission request in step S11.

Firstly, the response message may be transmitted using a predetermined message. In this case, the response message may be a new RRC message that is a UEAssistanceInformationResponse message. The response message may be a new message in a layer for the ambient IoT device 300 newly defined as an ambient IoT configuration accept message.

Secondly, if the CW transmission request message includes the radio resource information (that is, if the configuration of the radio resource is requested in the CW transmission request message), the response message may be a message indicating that the request has been accepted. On the other hand, if the CW transmission request message does not include the radio resource information (that is, if the configuration of the radio resource is not requested in the CW transmission request message), the response message may include the radio resource information. The radio resource information may be the same as the radio resource information (step 11) transmitted by the assisting node 430 to the gNB 200. If the CW transmission request message includes the radio resource information, but the gNB 200 cannot accept the radio resource information, the gNB 200 may include, in the response message, radio resource information that is a substitute of the radio resource information and transmit the response message. The gNB 200 may perform CW transmission using the substitute radio resource information, and the assisting node 430 may perform BS reception using the substitute radio resource information.

In step S13, the gNB 200 performs CW transmission in response to reception of the CW transmission request message (step S11). The gNB 200 may perform CW transmission using the radio resource information included in the CW transmission request message.

In step S14, the ambient IoT device 300 reflects the unmodulated carrier wave (CW) transmitted from the gNB 200 and transmits the reflected wave (BS). A receiver of the assisting node 430 receives the reflected wave. The receiver of the assisting node 430 may perform BS reception using a radio resource associated with (the identification information of) the ambient IoT device 300. An AS of the assisting node 430 may demodulate data from the received reflected wave, and output the demodulated data to the upper layer of the assisting node 430. The upper layer of the assisting node 430 may transmit the data to the server (e.g., the OTT server or the AMF 30) (step S15).

### Other Operation Example 1 According to First Embodiment

In the first embodiment, making a request for CW transmission from the assisting node 430 to the base stations 410 (specifically, the gNB 200) has been described. For example, the assisting node 430 may request the base station 410 (e.g., gNB 200) to perform BS reception. This case corresponds to topology 3 illustrated in FIG. 9(A).

That is, the assisting node 430 may transmit to the gNB 200 a BS reception request message indicating a request for BS reception. Similarly to the CW transmission request message, the BS reception request message may include the identification information of the ambient IoT device 300 (the group to which the ambient IoT device 300 belongs), and may include at least radio resource information used for BS reception. The BS reception request message may further include radio resource information used for CW transmission. The BS reception request message may be a message that does not include the identification information of the ambient IoT device 300 and the radio resource information, and simply requests CW transmission.

The gNB 200 may transmit a response message in response to reception of the BS reception request message. Similarly to the first embodiment, the response message may be also a message indicating that the radio resource information included in the BS reception request message has been accepted. The response message may include radio resource information configured by the gNB 200. The response message may include substitute radio resource information if the gNB 200 cannot accept the radio resource information included in the BS reception request message. The radio resource information may be the radio resource information used for the CW transmission. The radio resource information may be the radio resource information used for the BS reception. The radio resource information may be radio resource information used for both of the CW transmission and the BS reception.

The assisting node 430 may perform CW transmission after transmitting the BS reception request message. On the other hand, the gNB 200 may perform BS reception in response to reception of the BS reception request message.

### Other Operation Example 2 According to First Embodiment

In the above-described embodiment, an example where the assisting node 430 makes a request to the base stations 410 (specifically, the gNB 200) has been described. For example, the base station 410 may make a request to the assisting node 430. That is, the base station 410 may request CW transmission to the assisting node 430 (FIG. 9(A)). The base station 410 may request BS reception to the assisting node 430 (FIG. 9(B)).

As for the request for CW transmission (FIG. 9(A)), the CW transmission request message may be used similarly to the first embodiment. Similarly to the first embodiment, information included in the CW transmission request message may include the identification information of the ambient IoT device or may include the radio resource information. The CW transmission request message may be a message that does not include the identification information and the radio resource information, and simply requests to perform CW transmission.

As for the BS reception request (FIG. 9(B)), too, the BS reception request message may be used similarly to other operation example 1 according to the first embodiment. The information included in the BS reception request message may also include the identification information of the ambient IoT device or may include the radio resource information. The BS reception request message may be a message that does not include any one of the identification information and the radio resource information, and simply requests to perform BS reception.

### Other Operation Example 3 According to First Embodiment

In the above-described embodiment, the request for CW transmission and the request for BS reception in the case of topology 3 (FIGs. 9A and 9B) have been mainly described. For example, in the case of topology 2 (FIG. 8(B)), a request for CW transmission may be made, or a request for BS reception may be made.

That is, the base station 410 may transmit the CW transmission request message to the intermediate node 420. The CW transmission request message may include the identification information of the ambient IoT device 300 similarly to the first embodiment. The CW transmission request message may include the radio resource information. The CW transmission request message may be a message for simply requesting CW transmission. The base station 410 may transmit a BS reception request message to the intermediate node 420. The BS reception request message may include the identification information of the ambient IoT device 300 similarly to other operation example 1 of the first embodiment. The BS reception request message may include information relating to a radio resource. The BS reception request message may be a message for simply requesting to perform BS reception. The base station 410 may transmit a transmission/reception request message for requesting both of the CW transmission and the BS reception to the intermediate node 420. The transmission/reception request message may include the identification information of the ambient IoT device 300. The transmission/reception request message may include the information relating to the radio resource. The transmission/reception request message may be a message for simply requesting to perform the CW transmission and the BS reception. The CW transmission request message, the BS reception request message, and the transmission/reception request message may be transmitted as predetermined messages.

### Second Embodiment

The second embodiment will be described.

A configuration example of a protocol stack in the mobile communication system 1 including ambient IoT devices will be described in the second embodiment. Specifically, the configuration example of the protocol stack per topology will be described. Cases where a control plane (C-Plane) is used for data transmission and a user plane (U-plane) is used for data transmission in this case will be described separately.

The configuration example of the protocol stack will be described in following order.
(C1) Topology 1
   (C1-1) Case where data transmission is performed using control plane in case of topology 1 (C1-2) Case where data transmission is performed using user plane in case of topology 1
(C2) Topology 2
   (C2-1) Case where data transmission is performed using control plane in case of topology 2 (C2-2) Case where data transmission is performed using user plane in case of topology 2
(C3) Topology 3
   (C3-1) Case where data transmission is performed using control plane in case of topology 3 (C3-2) Case where data transmission is performed using user plane in case of topology 3
(C4) Topology 4
   (C4-1) Case where data transmission is performed using control plane in case of topology 4
   (C4-2) Case where data transmission is performed using user plane in case of topology 4

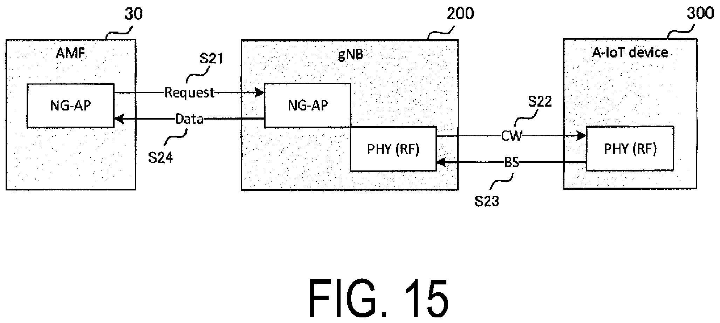

Note that, in the following description, some of the protocols illustrated in the drawings are omitted. In, for example, FIG. 15, an RRC layer, a PDCP layer, an RLC layer, and a MAC layers are omitted as lower layers of the NG-AP layer of the gNB 200. However, in practice, the following description will be made assuming that these protocols are included.

### (C1) Topology 1

### (C1-1) Case where data transmission is performed using control plane in case of topology 1

Firstly, a configuration example of a protocol stack in a case where data transmission is performed using the control plane in the case of topology 1 (FIG. 8(A)) will be described.

FIG. 15 is a diagram illustrating a configuration example of the protocol stack according to the second embodiment.

As illustrated in FIG. 15, the AMF 30 and the gNB 200 are connected to each other via the NG-AP layer. The NG-AP layer of the AMF 30 and the NG-AP layer of the gNB 200 may transmit NG-AP messages.

In step S21, the NG-AP layer of the AMF 30 transmits to the NG-AP layer of the gNB 200 a communication request message for requesting communication with the ambient IoT device 300. The communication request message may be an NG-AP message. The communication request message may be a CW transmission request message described in the first embodiment. The communication request message may be a BS reception request message described in other operation example 1 according to the first embodiment. The communication request message may be a transmission/reception request message described in other operation example 3 according to the first embodiment. The communication request message may be a configuration message for configuring communication with the ambient IoT device 300.

In step S22, the PHY layer of the gNB 200 performs CW transmission in response to receiving the communication request message (step S21). The PHY layer of the ambient IoT device 300 transmits a reflected wave (BS) for the CW transmission.

In step S23, the PHY layer of the gNB 200 transmits the reflected wave (BS).

In step S24, the NG-AP layer of the gNB 200 transmits data received through the BS reception to the NG-AP layer of the AMF 30. The data is included in the NG-AP message and transmitted.

In FIG. 15, the gNB may be used in place of the AMF 30. In this case, the gNB is the gNB #1, and the gNB 200 that functions as the communication node 400 is the gNB #2. An Xn-AP layer of the gNB #1 and an Xn-AP layer of the gNB #2 can transmit and receive the Xn-AP messages. Accordingly, in this case, the communication request message and the data are included in the Xn-AP message and transmitted.

In FIG. 15, the CU of the gNB may be used in place of the AMF 30. In this case, the gNB 200 that functions as the communication node 400 is a DU of the gNB. The CU and the DU are connected in an F1-AP layer and can transmit and receive F1-AP messages. Accordingly, in this case, the communication request message and the data are included in the F1-AP message and transmitted.

In FIG. 15, a core network apparatus that has a function of the control plane may be used in place of the AMF 30. Examples of such a core network apparatus include a Network Exposure Function (NEF). The NEF supports a function of releasing functions inside the 5G system to the outside. For example, the NEF has a function of releasing, to the outside, monitoring event information relating to an event that has occurred in the 5G system, or releasing some of functions inside the 5G system to the outside. The NEF and the gNB 200 are connected in a specific layer, and transmission of a communication request message (step S21) and transmission of data (step S24) are performed using a message for supporting the specific layer.

### (C1-2) Case where data transmission is performed using user plane in case of topology 1

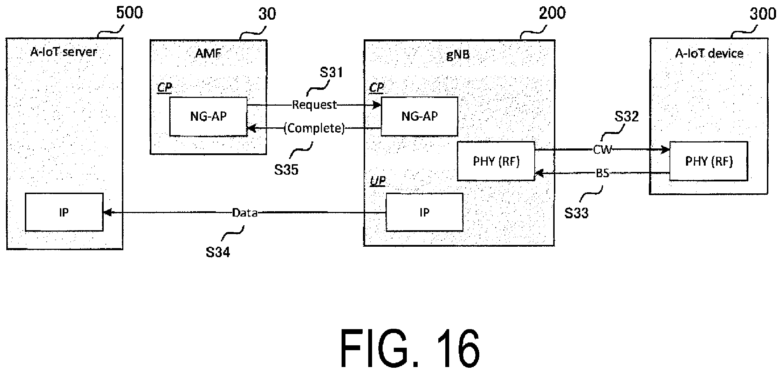

A configuration example of a protocol stack in a case where data transmission is performed using a user plane in the case of topology 1 will be described. FIG. 16 is a diagram illustrating a configuration example of the protocol stack according to the second embodiment.

FIG. 16 illustrates an example where the AMF 30 transmits a communication request to the ambient IoT device 300. That is, in step S31, the NG-AP layer of the AMF 30 transmits a communication request message indicating the communication request to the NG-AP layer of the gNB 200. The communication request message may be transmitted as an NG-AP message. The communication request message may be also a CW transmission request message. The communication request message may be a BW reception request message. The communication request message may be a transmission/reception request message for requesting both of CW transmission and BS reception. The communication request message may include information of a server 500 that is a data transmission destination. The server 500 is, for example, a server that can communicate with the ambient IoT device 300 and that is present outside the 5G system.

Firstly, the information of the server 500 may include an IP address of the server 500, a port number of the server 500, or a tunnel endpoint identifier (GTP TEID: GPRS Tunneling Protocol Tunnel Endpoint Identifier) to the server 500. The information of the server 500 may include identification information for identifying the server 500.

Secondly, data format information may be included as the information of the server 500. The data format information may be indicated by a format number associated with each format such as a Comma Separated Value (CSV) format.

Thirdly, the information of the server 500 may include application information. The application information may be identification information of an application used by the ambient IoT device 300.

In step S32, the PHY layer of the gNB 200 performs CW transmission in response to receiving the communication request message (step S31). The PHY layer of the ambient IoT device 300 reflects the CW and transmits the reflected wave (BS).

In step S33, the PHY layer of the gNB 200 performs BS reception.

In step S34, an Internet Protocol (IP) layer of the gNB 200 transmits the data received through the BS reception to the IP layer of the server 500. The IP layer of the gNB 200 transmits the data to the transmission destination server 500 according to the information of the server 500 received in step S31. The data is included in, for example, an IP packet and transmitted.

If data transmission has normally ended in step S35, the NG-AP layer of the gNB 200 may transmit a response message indicating normal completion to the NG-AP layer of the AMF 30. If the data transmission has abnormally ended (e.g., if the data transmission fails), the NG-AP layer of the gNB 200 may transmit a response message indicating the abnormal end to the NG-AP layer of the AMF 30. In this case, the response message may include a cause of the abnormality (e.g., the IP address of the server cannot be found).

Also in FIG. 16, the gNB, the CU of the gNB (in this case, the gNB 200 that functions as the communication node 400 is the DU of the gNB), or the core network apparatus may be used in place of the AMF 30. In a case where the gNB (or the CU of the gNB) is used in place of the AMF 30, the communication request message (step S31) and a completion message (step S35) may be transmitted using the Xn-AP message (or the F1-AP message). In the case where the core network apparatus other than the AMF 30 is used in place of the AMF 30, the communication request message (step S31) and the completion message (step S35) may be transmitted using a message associated with a layer defined between the core network apparatus and the gNB 200. Hereinafter, a message associated with a layer defined between the core network apparatus and the gNB 200 may be referred to as a "specific message".

### (C2) Topology 2

### (C2-1) Case where data transmission is performed using control plane in case of topology 2

A configuration example of the protocol stack in the case of topology 2 will be described. Firstly, the configuration example of the protocol stack in the case where data transmission is performed using the control plane in the case of topology 2 will be described.

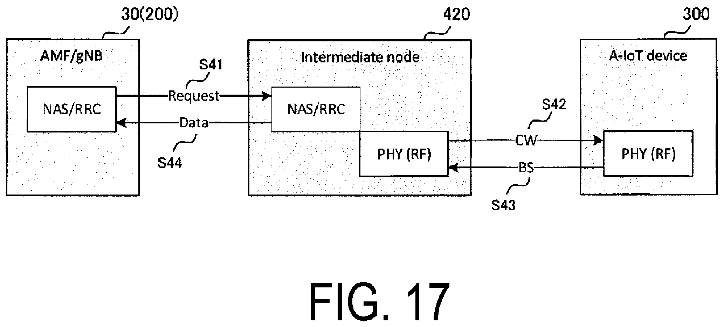

FIG. 17 is a diagram illustrating a configuration example of the protocol stack according to the second embodiment.

In FIG. 17, the UE 100 is an example of the intermediate node 420. That is, if the AMF 30 transmits a communication request to the ambient IoT devices 300 (step S41), the NAS layer of the AMF 30 transmits a communication request message (NAS message) indicating the communication request to the NAS layer of the intermediate node 420 (UE 100). If the gNB 200 transmits the communication request to the ambient IoT devices 300 (step S41), the RRC layer of the gNB 200 transmits the communication request message (RRC message) indicating the communication request to the RRC layer of the intermediate node 420 (UE 100). The communication request message may be the CW transmission request message described in the first embodiment. The communication request message may be a BW reception request message. The communication request message may be a transmission/reception request message for requesting CW transmission and BS reception.

The PHY layer of the UE 100 performs CW transmission in response to receiving the communication request message (step S42). The PHY layer of the ambient IoT device 300 transmits a reflected wave (BS) for the CW, and the PHY layer of the UE 100 performs BS reception (step S43). The NAS layer of the intermediate node 420 (UE 100) transmits the data received through the BS reception to the NAS layer of the AMF 30 (step S44). The RRC layer of the intermediate node 420 (UE 100) transmits the data to the RRC layer of the gNB 200 (step S45). In the example illustrated in FIG. 17, the data is transmitted using the NAS message or the RRC message.

The intermediate node 420 may be the gNB, the DU of the gNB (in this case, the entity that transmits the communication request is the CU of the gNB), the relay node, the IAB node, or the NCR. According to a combination of the entity (the AMF 30 or the gNB 200) that transmits the communication request and the entity (the gNB, the DU of the gNB, the relay node, the IAB node, or the NCR) of the intermediate node 420, the communication request message may be transmitted as a predetermined message (any of the NG-AP message, the Xn-AP message, the F1-AP message, or the new message of a layer created for ambient IoT) (step S41). The data may be also transmitted using the predetermined message according to the combination (step S44).

The entity that transmits the communication request (step S41) may be also the core network apparatus other than the AMF 30. The communication request (step S41) and the data (step S44) may be transmitted between the core network apparatus and the intermediate node 420 using the specific message that can be transferred between the core network apparatus and the intermediate node 420.

### (C2-2) Case where data transmission is performed using user plane in case of topology 2

A configuration example of a protocol stack in a case where data transmission is performed using a user plane in the case of topology 2 will be described. In this case, there are two cases of a case where a 3GPP node makes a communication request to the ambient IoT devices 300 and a case where the server 500 outside the 5G system makes a communication request. The cases will be described below in order.

### (C2-2-1) Case where communication request transmission source is AMF 30 (or gNB 200)

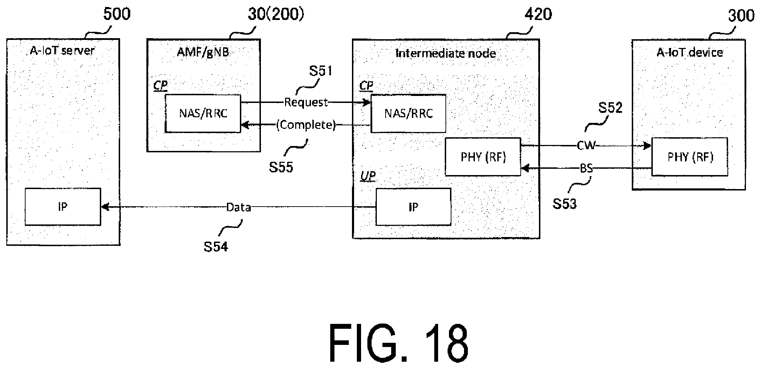

FIG. 18 is a diagram illustrating a configuration example of a protocol stack in a case where a communication request transmission source is a 3GPP node (specifically, the AMF 30 (or the gNB 200)). FIG. 18 illustrates an example where the intermediate node 420 is the UE 100 similarly to FIG. 17.

Step S51 to step S53 in FIG. 18 are the same as step S41 to step S43 in FIG. 17, respectively. The communication request (step S51) includes information of a data transmission destination server, which is the same as above-described "(C1-2) Case where data transmission is performed using user plane in case of topology 1" (FIG. 16).

In step S54, the IP layer of the intermediate node 420 transmits the data received through the BS reception to the IP layer of the server 500. The data may be included in an IP packet and transmitted.

In step S55, the intermediate node 420 may transmit a response message to the AMF 30 (or the gNB 200). Contents of the response message may be the same as the contents of the response message in step S35 of FIG. 16.

The intermediate node 420 in FIG. 18 may be also the gNB, the DU of the gNB (in this case, the entity that transmits the communication request is the CU of the gNB), the relay node, the IAB node, or the NCR. The communication request message may be transmitted as a predetermined message according to the combination of the entity (the AMF 30 or the gNB 200) that transmits the communication request and the entity (the gNB, the DU of the gNB, the relay node, the IAB node, or the NCR) of the intermediate node 420 (step S51). The response message may be also transmitted as the predetermined message according to the combination (step S55).

The entity that transmits the communication request (step S51) may be the core network apparatus other than the AMF 30. The communication request message (step S51) and the response message (step S55) may be transmitted using the specific message according to the combination of the core network apparatus and the entity of the intermediate node 420.

### (C2-2-2) Case where communication request transmission source is server 500

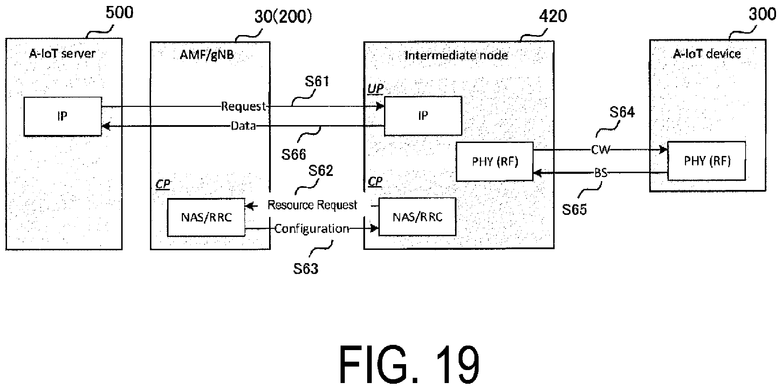

FIG. 19 is a diagram illustrating a configuration example of a protocol stack in a case where a communication request transmission source is the server 500. FIG. 19 also illustrates an example where the intermediate node 420 is the UE 100.

In step S61, the IP layer of the server 500 transmits to the IP layer of the intermediate node 420 the communication request message indicating the communication request for requesting communication with the ambient IoT device 300. The communication request message may be included in an IP packet and transmitted. The communication request message may be a CW transmission request message similarly to the first embodiment. The communication request message may be a BW reception request message. The communication request message may be a transmission/reception request message for requesting CW transmission and BS reception. The communication request message may include the information of the transmission destination server 500 similarly to step 31 in "(C1-2) Case where data transmission is performed using user plane in case of topology 1" (FIG. 16).

In step S62, the NAS layer (or the RRC layer) of the intermediate node 420 requests the NAS layer of the AMF 30 (or the RRC layer in the gNB 200) for radio resources to be used for CW transmission and BS reception in response to receiving the communication request message. The request may be transmitted as a radio resource request message. The radio resource request message may include the radio resource information included in the CW transmission request message (step S11 in FIG. 14) described in the first embodiment. The radio resource request message may be a message for simply requesting a radio resource.

In step S63, the NAS layer of the AMF 30 (or the RRC layer of the gNB 200) transmits a radio resource configuration message including information of the radio resource to the NAS layer (or the RRC layer) of the intermediate node 420 in response to receiving the radio resource request message (step S62). The radio resource may be a radio resource used for the CW transmission and the BS reception. The radio resource configuration message may be a message including the same contents as that of the response message (step S12 in FIG. 14) described in the first embodiment.

In step S64, the PHY layer of the intermediate node 420 performs CW transmission using the radio resource (step S63) included in the radio resource configuration message in response to receiving the communication request message (step S61). The ambient IoT device 300 reflects the CW and transmits a reflected wave (BS).

In step S65, the PHY layer of the intermediate node 420 performs BS reception. In step S66, the IP layer of the intermediate node 420 transmits data received through the BS reception to the IP layer of the server 500.

Although the example where the intermediate node 420 receives the communication request message from the server 500 (step S61) and then transmits the radio resource request message to the AMF 30 (or the gNB 200) (step S62) in FIG. 19 has been described, the order of the reception and the transmission may be reversed. That is, the intermediate node 420 may first transmit the radio resource request message, receive a configuration of the radio resource, and then receive the communication request message from the server 500.

Also in FIG. 19, the intermediate node 420 may be the gNB, the DU of the gNB (in this case, the CU of the gNB 200 is a resource request transmission destination), the IAB node, the NCR, or the like. The radio resource request message (step S62) and the radio resource configuration message (step S63) may be transmitted using the predetermined message according to the type of the intermediate node 420. In FIG. 19, a radio resource configuration destination may be also the core network apparatus other than the AMF 30, and the core network apparatus and the intermediate node 420 may transmit the radio resource request message and the radio resource configuration message using the specific message.

### (C3-1) Case where data transmission is performed using control plane in case of topology 3

A configuration example of a protocol stack in case of topology 3 will be described. Firstly, the configuration example of the protocol stack in the case where data transmission is performed using the control plane in the case of topology 3 will be described.

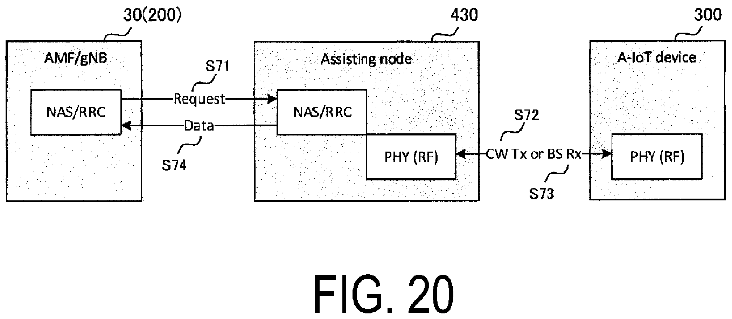

FIG. 20 is a diagram illustrating the configuration example of the protocol stack according to the second embodiment. FIG. 20 illustrates an example where the assisting node 430 is the UE 100.

Basically, "(C2-1) Case where data transmission is performed using control plane in case of topology 2" (FIG. 17) can be implemented by replacing the intermediate node 420 with the assisting node 430. That is, by replacing the intermediate node 420 with the assisting node 430 in FIG. 17, the same processing as that in step S41 and step S44 in FIG. 17 can be performed in step S71 and step S74 in FIG. 20.

In this regard, in the case of topology 3, a transmission destination of the CW transmission and a reception destination of the BS reception are different. Hence, even if the PHY layer of the assisting node 430 performs CW transmission (step S72), BS reception for the CW transmission is performed by another entity (gNB 200). On the other hand, the gNB 200 performs CW transmission, so that the PHY layer of the assisting node 430 can receive a reflected wave from the ambient IoT devices 300 for the CW transmission (BS reception) (step S73). In this case, the NAS layer (or the RRC layer) of the assisting node 430 transmits a NAS message (or an RRC message) including the data received through the BS reception to the NAS layer of the AMF 30 (or the RRC layer of the gNB 200) (step S74).

Note that the assisting node 430 may be the gNB, the DU of the gNB (in this case, a transmission source that transmits the communication request message (step 71) to the ambient IoT device 300 is the CU of the gNB), the relay node, the IAB node, or the NCR in addition to the UE 100. The transmission source entity that transmits the communication request message (step S71) may be the core network apparatus other than the AMF 30. The communication request message (step S71) and the data (step S74) may be transmitted using the predetermined message or may be transmitted using the specific message according to a combination of a type of the transmission source entity of the communication request message and a type of the entity of the assisting node 430.

### (C3-2) Case where data transmission is performed using user plane in case of topology 3

A case will be described where data transmission is performed using a user plane in the case of topology 3. Also in this case, there are two cases of a case where the 3GPP node makes a communication request to the ambient IoT devices 300 and a case where the server 500 makes a communication request.

### (C3-2-1) Case where communication request transmission source is AMF 30 (or gNB 200)

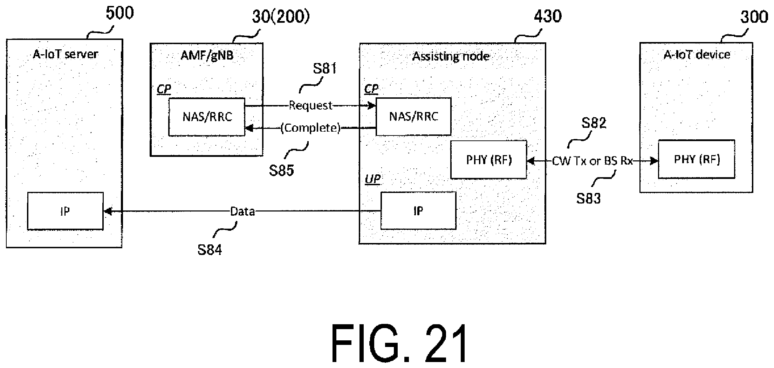

FIG. 21 is a diagram illustrating a configuration example of a protocol stack in a case where a communication request transmission source is the AMF 30 (or the gNB 200). FIG. 21 illustrates an example where the assisting node 430 is the UE 100.

Basically, "(C2-2-1) Case where communication request transmission source is AMF 30 (or gNB 200)" (FIG. 18) can be implemented by replacing the intermediate node 420 with the assisting node 430. That is, by replacing the intermediate node 420 with the assisting node 430 in FIG. 18, the same processing as that in step S51, step S54, and step S55 in FIG. 18 can be performed in step S81, step S84, and step S85 in FIG. 21, respectively.

In this regard, in the case of topology 3, a transmission destination of the CW transmission and a reception destination of the BS reception are different. Hence, even if the PHY layer of the assisting node 430 performs CW transmission (step S82), BS reception for the CW transmission is performed by another entity (gNB 200). On the other hand, the gNB 200 performs CW transmission, so that the PHY layer of the assisting node 430 can receive a reflected wave from the ambient IoT devices 300 for the CW transmission (BS reception) (step S83). In this case, the IP layer of the assisting node 430 transmits the data received through the BS reception to the IP layer of the server 500 (step S84). The data is included in an IP packet and transmitted.

The assisting node 430 may be the gNB, the DU of the gNB (in this case, a transmission source that transmits the communication request message (step 81) to the ambient IoT device 300 is the CU of the gNB 200), the relay node, the IAB node, or the NCR in addition to the UE 100. The transmission source entity that transmits the communication request message (step S81) may be the core network apparatus other than the AMF 30. The communication request message (step S81) and the response message (step S85) may be transmitted using the predetermined message or the specific message according to a combination of the type of the transmission source entity of the communication request message and the type of the entity of the assisting node 430.

### (C3-2-2) Case where communication request transmission source is server 500

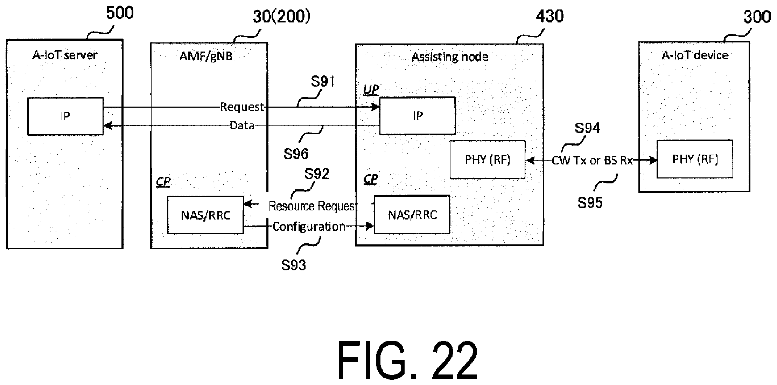

FIG. 22 is a diagram illustrating a configuration example of a protocol stack in a case where a communication request transmission source is the server 500. FIG. 22 also illustrates the example where the assisting node 430 is the UE 100.

Basically, "(C2-2-2) Case where communication request transmission source is AMF 30 (or gNB 200)" (FIG. 19) can be implemented by replacing the intermediate node 420 with the assisting node 430. That is, by replacing the intermediate node 420 with the assisting node 430 in FIG. 19, the same processing as that in step S61, step S62, step S63, and step S66 in FIG. 19 can be performed in step S91, step S92, step 93, and step 96 in FIG. 22, respectively.

In this regard, in the case of topology 3, a transmission destination of the CW transmission and a reception destination of the BS reception are different. Hence, even if the PHY layer of the assisting node 430 performs CW transmission (step S94), BS reception for the CW transmission is performed by another entity (gNB 200). On the other hand, the gNB 200 performs CW transmission, so that the PHY layer of the assisting node 430 can receive a reflected wave from the ambient IoT devices 300 for the CW transmission (BS reception) (step S95). In this case, the IP layer of the assisting node 430 transmits the data received through the BS reception to the IP layer of the server 500 (step S96). The data is included in an IP packet and transmitted.

The assisting node 430 illustrated in FIG. 22 may be also the gNB, the DU of the gNB (in this case, the transmission source that transmits the communication request message (step S91) to the ambient IoT devices 300 is the CU of the gNB), the relay node, the IAB node, or the NCR. A transmission destination of the radio resource request message (step S92) may be also the core network apparatus other than the AMF 30. The radio resource request message (step S92) and the radio resource configuration information (step S93) may be transmitted using any one of the predetermined message or the specific message according to the combination of the type of the transmission destination entity of the radio resource request message and the type of the entity of the assisting node 430.

### (C4) Topology 4

A configuration example of a protocol stack in case of topology 4 will be described. Firstly, the configuration example of the protocol stack in the case where data transmission is performed using the control plane in the case of topology 4 will be described.

### (C4-1) Case where data transmission is performed using control plane in case of topology 4

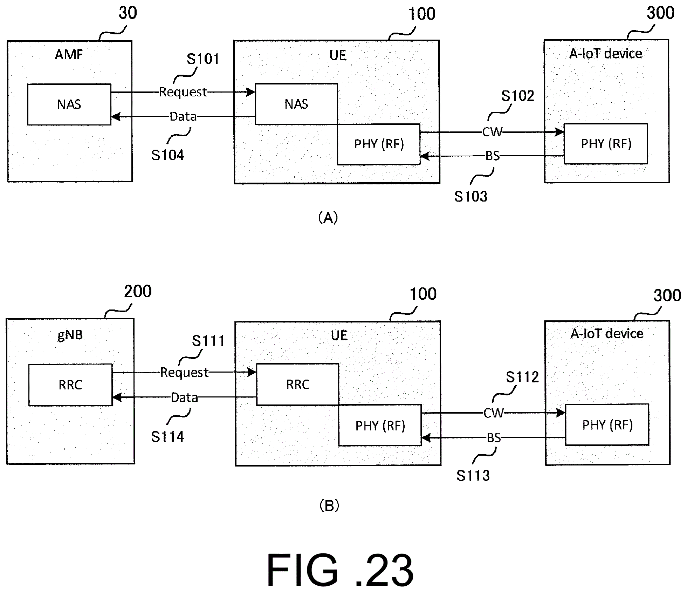

FIGs. 23A and 23B are diagrams illustrating configuration examples of a protocol stack in the case where data transmission is performed using the control plane in the case of topology 4. FIG. 23(A) illustrates an example of a case where the AMF 30 makes a communication request, and FIG. 23(B) illustrates an example of a case where the gNB 200 makes a communication request.

In both of FIGs. 23A and 23B, "(C2-1) Case where data transmission is performed using control plane in case of topology 2" (FIG. 17) can be basically implemented by replacing the intermediate node 420 with the UE 100. That is, by replacing the intermediate node 420 with the UE 100 in FIG. 17, the same processing as that in step S41 to step S44 in FIG. 17 can be performed in step S101 to step S104 in FIG. 23(A), respectively. By replacing the intermediate node 420 in FIG. 17 with the UE 100, the same processing as that in step S41 to step S44 in FIG. 17 can be performed in step S111 to step S114 in FIG. 23(B), respectively.

The entity that makes the communication request (step S101) may be the core network apparatus other than the AMF 30. In this case, transmission of the communication request message (step S101) and the data (step S104) may be performed via the gNB 200. Transmission of the communication request message and transmission of the data may be performed between the core network apparatus and the gNB 200 using the specific message, and transmission of the communication request message and transmission of the data may be performed between the gNB 200 and the UE 100 using the RRC message.

### (C4-2) Case where data transmission is performed using user plane in case of topology 4

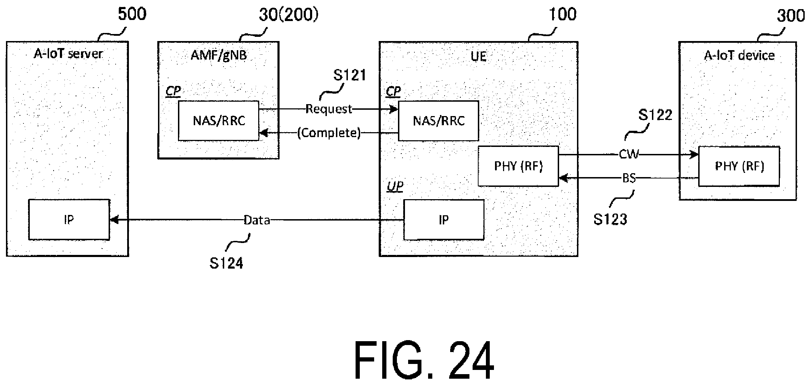

FIG. 24 is a diagram illustrating a configuration example of a protocol stack in the case where data transmission is performed using the user plane in the case of topology 4.

In FIG. 24, "(C2-2-1) Case where communication request transmission source is AMF 30 (or gNB 200)" (FIG. 18) can be basically implemented by replacing the intermediate node 420 with the UE 100. That is, by replacing the intermediate node 420 with the UE 100 in FIG. 18, the same processing as that in step S51 to step S54 in FIG. 18 can be performed in step S121 to step S124 in FIG. 24, respectively.

The entity that makes the communication request may be the core network apparatus other than the AMF 30. In this case, transmission of the communication request message (step S121) and the response message (step S125) may be performed via the gNB 200. Transmission of the communication request message and transmission of the response message may be performed between the core network apparatus and the gNB 200 using the specific message, and transmission of the communication request message and transmission of the response message may be performed between the gNB 200 and the UE 100 using the RRC message.

### Other Embodiments

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps do not need to be performed, and only some of the steps may be performed.

Although the example where the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

That is, the UE 100 may be a terminal function unit (a type of communication module) for a base station to control a repeater that performs signal relay. Such a terminal function unit will be referred to as an MT. Examples of the MT include a Network Controlled Repeater (NCR)-MT and a Reconfigurable Intelligent Surface (RIS)-MT in addition to the IAB-MT.

The term "network node" mainly means a base station, but may also mean a core network apparatus or a part (CU, DU, or RU) of the base station. The network node may include a combination of at least a part of the core network apparatus and at least a part of the base station.

A program causing a computer to execute each processing performed by the UE 100, the gNB 200, the communication node 400, or the core network apparatus may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM and/or a DVD-ROM. Circuits that execute each processing that is to be performed by the UE 100, the gNB 200, the communication node 400, or the core network apparatus may be integrated, and at least a part of the UE 100, the gNB 200, the communication node 400, or the core network apparatus may be configured as a semiconductor integrated circuit (a chipset or a System on a Chip (SoC)).

The functions implemented by the UE 100, the gNB 200, the communication node 400, or the core network apparatus may be implemented in a circuitry or a processing circuitry programmed to implement the described functions, and including a general-purpose processor, a special-purpose processor, an integrated circuit, Application Specific Integrated Circuits (ASICs), a Central Processing Unit (CPU), a conventional circuit, and/or combinations thereof. The processor may include transistors and other circuits and may be considered a circuitry or a processing circuitry. The processor may be a programmed processor that executes a program stored in the memory. As used herein, a circuitry, a unit, and means are hardware programmed to achieve, or hardware performing the described functions. The hardware may be any hardware disclosed herein or any hardware programmed to implement or known to perform the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on/in response to" means both "only depending on/in response to" and "at least partially depending on/in response to". The terms "include," "comprise" and variations thereof do not mean "include only items stated" but instead mean "may include only items stated" or "may include not only the items stated but also other items." The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variations can be made without departing from the gist of the present disclosure. The embodiments, the operation examples, or the different types of processing may be combined as appropriate as long as they are not inconsistent with each other.

This application claims priority to Japanese Patent Application No. 2023-179853 (filed on October 18, 2023), the contents of which are incorporated herein by reference in their entirety.

### Supplementary Notes

### Supplementary Note 1

A communication control method in a wireless communication system includes the steps of: transmitting, at a communication node, to a base station, a transmission request message for requesting transmission of an unmodulated carrier wave;
transmitting, at the base station, the unmodulated carrier wave in response to reception of the transmission request message; and
receiving, at the communication node, a reflected wave of the unmodulated carrier wave from an IoT device.

### Supplementary Note 2

The communication control method according to Supplementary Note 1, wherein the communication node is an assisting node configured to receive the reflected wave of the unmodulated carrier wave from the IoT device without transmitting the unmodulated carrier wave to the IoT device.

### Supplementary Note 3

The communication control method according to Supplementary Note 1 or 2, wherein the transmission request message includes identification information of the IoT device and/or identification information of a group to which the IoT device belongs.

### Supplementary Note 4

The communication control method according to any one of Supplementary Note 1 or 3, wherein the transmission request message includes information relating to a radio resource, and the radio resource includes at least information relating to a radio resource used for the transmission of the unmodulated carrier wave.

### Supplementary Note 5

The communication control method according to any one of Supplementary Note 1 or 4, wherein the radio resource includes information relating to a radio resource used for the reception of the reflected wave.

### Supplementary Note 6

The communication control method according to any one of Supplementary Note 1 or 5 further includes:
transmitting, at the base station, a response message to the communication node in response to the reception of the transmission request message,
wherein the response message is a message indicating that the information has been accepted when the transmission request message includes information relating to the radio resource, the response message includes the information relating to the radio resource when the transmission request message does not include the information relating to the radio resource, and the response message includes information relating to a radio resource that is a substitute of the information relating to the radio resource when the transmission request message includes the information relating to the radio resource and the base station cannot accept the information relating to the radio resource.

### Supplementary Note 7

The communication node in a wireless communication system includes:
a controller configured to:
transmit to a base station a transmission request message for requesting transmission of an unmodulated carrier wave; and
receive, from an IoT device, a reflected wave of the unmodulated carrier wave transmitted from the base station in response to reception of the transmission request message.

### REFERENCE SIGNS

1: Wireless communication system
10: NG-RAN
20: 5GC (CN)
30: AMF
100: UE
110: Receiver
120: Transmitter
130: Controller
200: gNB
210: Transmitter
220: Receiver
230: Controller
300: Ambient IoT Device
310: Antenna
320: Switch
330: Controller
340: Memory
400: Communication node
410: Base station
420: Intermediate node
430: Assisting node

## Claims

1. A communication control method in a wireless communication system, the communication control method comprising the steps of:
transmitting, at a communication node, to a base station, a transmission request message for requesting transmission of an unmodulated carrier wave;
transmitting, at the base station, transmitting the unmodulated carrier wave in response to reception of the transmission request message; and
receiving, at the communication node, a reflected wave of the unmodulated carrier wave from an IoT device.

2. The communication control method according to claim 1, wherein the communication node is an assisting node configured to receive the reflected wave of the unmodulated carrier wave from the IoT device without transmitting the unmodulated carrier wave to the IoT device.

3. The communication control method according to claim 1, wherein the transmission request message comprises identification information of the IoT device and/or identification information of a group to which the IoT device belongs.

4. The communication control method according to claim 1, wherein
the transmission request message comprises information relating to a radio resource, and
the radio resource includes at least information relating to a radio resource used for the transmission of the unmodulated carrier wave.

5. The communication control method according to claim 4, wherein the radio resource comprises information relating to a radio resource used for the reception of the reflected wave.

6. The communication control method according to claim 1, further comprising:
transmitting, at the base station, a response message to the communication node in response to the reception of the transmission request message,
wherein the response message is a message indicating that the information has been accepted when the transmission request message comprises information relating to the radio resource, the response message comprises the information relating to the radio resource when the transmission request message does not comprise the information relating to the radio resource, and the response message comprises information relating to a radio resource that is a substitute of the information relating to the radio resource when the transmission request message comprises the information relating to the radio resource and the base station cannot accept the information relating to the radio resource.

7. A communication node in a wireless communication system, the communication node comprising:
a controller configured to:
transmit to a base station a transmission request message for requesting transmission of an unmodulated carrier wave; and
receive, from an IoT device, a reflected wave of the unmodulated carrier wave transmitted from the base station in response to reception of the transmission request message.
